# EUROPEAN PATENT APPLICATION

(11) **EP 4 163 080 A1**
(43) Date of publication of application: **12.04.2023**
(21) Application number: 22200326.1
(22) Date of filing: 07.10.2022
(51) Int. Cl.: B29C 45/06, B29C 45/00, B29C 45/26

(54) **MOLD AND METHOD FOR PRODUCING ARTICLES FORMED BY HALF-SHELLS IN THERMOPLASTIC MATERIAL**

(30) Priority: 07.10.2021 IT 202100025511
(71) Applicant: S.I.G.I.T. - Societa' Italiana Gomma Industriale Torino - SpA, 06016 San Giustino (PG) (IT); Esistampi Societa' A Responsabilita' Limitata, 60030 Monte Roberto (AN) (IT)
(72) Inventor: GIARDINO, Sergio, 22012 Cernobbio (Como) (IT); MARCHISIO, Emanuele, 14022 Castelnuovo Don Bosco (Asti) (IT); CAPOMASI, Alessandro, 60034 Cupramontana (Ancona) (IT)
(74) Representative: Savoca, Agatino

(57) **Abstract**

A method for the production of manufactured articles (O) formed by half-shells in thermoplastic material comprising the steps of providing an injection mold (9) comprising two half-molds (10, 12), which are moved with respect to each other so that when the injection mold (9) is in the closed position, a male cavity carried by the fixed half-mold faces an empty space that avoids its mechanical interference with the corresponding male cavity carried by the movable half-mold.

## Description

### Technical field

The present invention is, in general, in the field of molding manufactured articles in plastics material; in particular, the invention relates to an apparatus and a method for the production of manufactured articles formed by half-shells in thermoplastic material.

### Prior art

There are well-known solutions for the production of manufactured articles in plastics material formed by the coupling of two half-shells.

In order to make the manufacturing process more efficient, the solution of equipping an injection mold with two pairs of cavities (male cavity and female cavity) is contemplated in the prior art, each pair being symmetrical with respect to a diametrical plane of the mold and being adapted to jointly define a shape with which to make the two half-shells, where two of the cavities are carried by a movable half-mold, while the two complementary cavities are carried by the fixed die of the mold.

Once the two half-shells are formed, the half-molds are pushed apart, making sure that one of the two half-shells is held by one half-mold, and the other of the two half-shells is held by the other half-mold. The movable half-mold is then rotated around its axis until the two half-shells are aligned, after which the mold is closed again by bringing the half-shells into contact with each other along one of their junction edges, where they are made mutually integral by the addition of additional thermoplastic material to form a perimeter junction bead.

A solution of the aforesaid type is known from WO 2018/095747 A1; however, it has substantial limitations with regard to the allowable shape of the manufactured article, as the male cavities must be able to interpenetrate without mechanical interference when the mold closes to couple the two formed half-shells.

A mold thus configured is therefore unsuitable for the production of manufactured articles having complex shapes, or including transverse protrusions, which require that the cavities have very pronounced protuberances that are likely to interfere with each other as the mold is closed and the formed half-shells are coupled together.

Moreover, a mold of the aforesaid type requires complex operational adjustment, since between the first and second closing of the mold the distance between the press planes must vary, which will be dependent only on the thickness of the half-shells in the first closing, and on the depth thereof in the second.

This limitation understandably impairs the usability of a mold according to the prior art.

### Summary of the invention

The object of the present invention is to overcome the aforementioned limits.

To achieve this result, a mold and a method for the production of manufactured articles in thermoplastic material requires one of the half-molds (or part thereof) to be movable so that a space is left free in which the free male cavity of the other half-mold may be inserted axially.

For example, a half-mold may have at least one movable plate which carries one of the cavities (in this case, the male cavity that serves to form one of the two half-shells).

The plate is configured to create sufficient space so that when the mold is closed to couple the two half-shells, the male cavity corresponding to the other of the two half-shells may be inserted into that space without interfering with the cavity carried by the plate.

This effect may be achieved, for example, by retracting the plate within the thickness of the corresponding half-mold (i.e., by moving it back along the closing axis of the mold), or, for example, by pulling the plate radially from the corresponding half-mold, so that a space (left free by the plate) is obtained within said half-mold, within which the opposite male cavity, carried by the other half-mold, may be inserted.

With an apparatus and a method according to the present invention, it thus becomes possible to produce complex-shaped manufactured articles, significantly reducing their production time.

Furthermore, it becomes possible to keep the distance between the press planes constant, simplifying the architecture and management logic of the apparatus.

The aforesaid and other objects and advantages are achieved, according to an aspect of the invention, by a mold and a method having the features defined in the appended claims. Preferred embodiments of the invention are defined in the dependent claims.

### Brief description of the drawings

The functional and structural features of some preferred embodiments of a mold and a method for the production of manufactured articles in thermoplastic material according to the invention will now be described. Reference is made to the accompanying drawings, in which:
- Fig. 1 and 2 are two schematic perspective views of a generic manufactured article formed by the coupling of two half-shells, shown from two different angles;
- Fig. 3 and 4 are two schematic perspective views of an injection mold in a closed and exploded configuration, respectively, according to an embodiment of the present invention;
- Fig. 5A and 5B are two front schematic views of the two half-molds in an initial molding position, in which the cavities cooperating in forming the respective half-shells are in radially corresponding positions;
- Fig. 6A and 6B are, respectively, a schematic front view of the movable half-mold rotated into a second molding position, and a top view of the mold when the movable half-mold is in said second molding position, in which the cavities carrying one of the already formed half-shells face the cavities carrying the other of the already formed half-shells;
- Fig. 7A and 7B are, respectively, a front schematic view of the movable half-mold rotated in the aforesaid second molding position, in which the plates carrying the empty cavities (i.e., the cavities in which the already formed half-shells are not present) are extracted radially, and a top view of the mold when the movable half-mold is in said configuration, so that a space is obtained into which the empty cavities carried by the opposite half-mold may be inserted, according to an embodiment of the invention;
- Fig. 8 is a schematic view from above of the mold in Fig. 7B, in the closed position;
- Fig. 9A and 9B are, respectively, a front schematic view of a plate bearing a plurality of cavities associated with the production of a half-shell, and a detail view of a junction section between the two half-shells, according to an embodiment of the invention; and
- Fig. 10 is a schematic view from above of the mold in Fig. 7B in the open position, in which the finished manufactured articles are visible after extraction from their respective cavities.

### Detailed description

Before explaining in detail a plurality of embodiments of the invention, it should be clarified that the invention is not limited in its application to the design details and configuration of the components presented in the following description or illustrated in the drawings. The invention is able to assume other embodiments and to be implemented or constructed in practice in different ways. It should also be understood that the phraseology and terminology have a descriptive purpose and should not be construed as limiting.

Referring by way of example to the figures, an injection mold 9 for the production of manufactured articles O formed by half-shells in thermoplastic material comprises a first half-mold 10 and a second half-mold 12, each of which comprises at least one primary cavity 14 and at least one secondary cavity 16 angularly offset with respect to a closing axis x of the injection mold 9 (i.e., the axis along which the half-molds 10, 12 are mutually put together and pulled apart from each other).

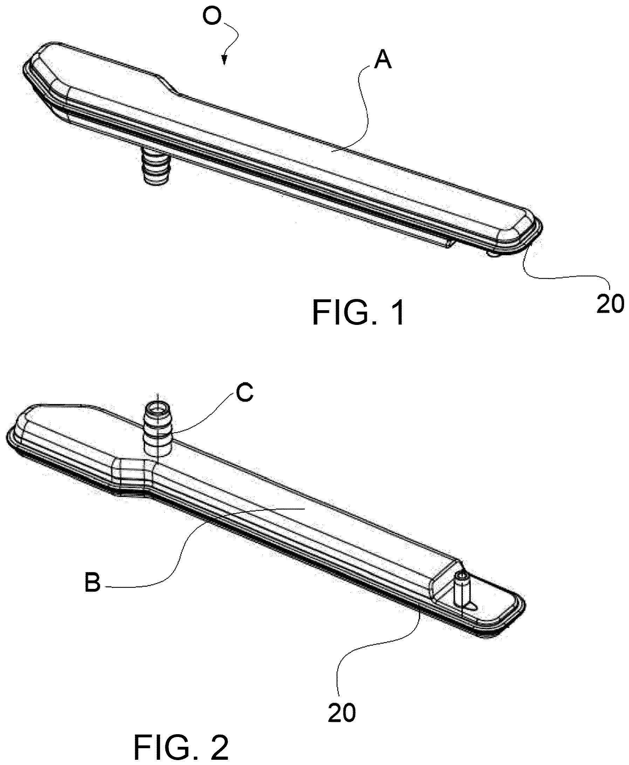

The primary cavities 14 of the two half-molds 10, 12 are configured to jointly define a form suitable for making a first half-shell A, and the secondary cavities 16 are configured to jointly define a form suitable for making a second half-shell B, the two half-shells A, B being suitable in turn to form a generic thermoplastic manufactured article O (e.g., a dispensing swivel arm for dispensing liquids, a sealed container, or a tank as shown in Fig. 1 and 2).

In the example shown, one of the two half-shells also has a formation C, protruding from one of the half-shells A, B in a direction substantially perpendicular to a junction plane of the two half-shells. In this case, since the protruding formation C extends from only one of the two half-shells, the male cavity provided for making the second half-shell B (which in the example includes said protruding formation C) will comprise an offshoot adapted to make said protruding formation C, which in this example will have an axial extension (i.e., along the closing axis x of the injection mold 9) greater than the axial extension of the offshoot in the male cavity for making the first half-shell A, so that these two offshoots would collide when mutually facing each other with the mold 9 closed.

In any case, it is understood that the shape and size of the manufactured article O, as depicted in the figures, are not intended to be limiting, as the invention may apply to manufactured articles of different shapes and sizes.

According to an embodiment, the first half-mold 10 also movably supports a plate 18 that carries the at least one primary cavity 14. It is nonetheless conceivable that said plate 18 carries the at least one secondary cavity 16 instead, it being essentially irrelevant which cavity is carried by the plate 18.

The plate 18 is supported by the relevant half-mold 10 in such a way that, as it moves with respect to said half-mold 10, it frees in the thickness of said half-mold 10 sufficient space to accommodate, when the mold 9 is in the closed position, the portion of the secondary cavity 16 associated with the other half-mold and axially protruding therefrom.

There are also primary actuator means, suitable for translating at least one of the two half-molds 10, 12 with respect to the other along said closing axis x of the injection mold 9 between an opening position of the injection mold 9, wherein the two half-molds 10, 12 are mutually spaced along the closing axis x of the injection mold 9, and a closing position of the injection mold 9, wherein the two half-molds 10, 12 are mutually in contact. Conveniently, the primary actuating means comprise the opposing plates of a conventional press, on which the half-molds 10, 12 are carried.

The mold 9 further includes primary injector means, suitable for conveying a flow rate of thermoplastic material to the primary and secondary cavities 14, 16 when the injection mold 9 is in a closed configuration.

According to an embodiment, secondary actuator means (including, for example, a rotary table 17 integral in rotation with the first half-mold 10) are provided, adapted to rotate at least one of the two half-molds 10, 12 with respect to the other around said closing axis x of the injection mold 9, in such a way that at least one primary cavity 14 of the first half-mold 10 is aligned with a corresponding primary cavity 14 carried by the second half-mold 12, and in such a way that the at least one secondary cavity 16 of the first half-mold 10 is aligned with a corresponding secondary cavity 16 carried by the second half-mold 12.

According to an embodiment (not illustrated), the secondary actuator means are adapted to cause at least one of the two half-molds 10, 12 to translate (and possibly rotate) with respect to the other of the two half-molds 10, 12 along a direction perpendicular to the closing axis x of the injection mold 9, in such a way that, when the injection mold 9 is in the closed position, the secondary cavity 16 of said second half-mold 12 faces an empty space having an axial extension at least equal to the axial thickness of the first half-mold 10. For example, starting from a configuration in which there are only two pairs of primary and secondary cavities 14, 16 (in such a way that only a first and a second half-shell are made), once the mold is closed and the two half-shells are formed (assuming that the two half-shells are in diametrically symmetrical positions, for example, one below the other vertically), one half-shell may be detached axially from the other, and translated diametrically (e.g., vertically), until the half-shell in the lower position (carried, for example, by the first half-mold) is brought into alignment with the half-shell in the upper position (carried, for example, by the second half-mold). In so doing, the lower cavity of the second half-mold (the one not occupied by the half-shell) will face an empty space, as the first half-mold will be vertically offset (i.e., the upper cavity of the first half-mold, not occupied by the half-shell, will protrude above the second half-mold).

The mold 9 also comprises secondary injector means, suitable for conveying a flow of thermoplastic material at or near a junction edge 20 between the half-shells A, B, so as to make the latter mutually integral. From a circuit point of view, the primary and secondary injection means may at least partially coincide, and/or share the same material supply channels. Conveniently, the primary and secondary cavities 14, 16 are configured in such a way that the half-shells A, B define, at or near the junction edge 20, an annular cavity into which the plastics filler material may be injected, so that the two half-shells A, B are mutually joined.

According to an embodiment of the invention, the plate 18 is supported by the first half-shell 10 in a sliding (preferably translatable) manner along a direction perpendicular to the closing axis x of the injection mold 9 (in the illustrated example, a substantially radial direction).

Conveniently, each half-mold 10, 12 comprises at least one pair of primary cavities 14 symmetrical with respect to a first diametrical plane of the relevant half-mold 10, 12 and at least one pair of secondary cavities 16 symmetrical with respect to a second diametrical plane of the relevant half-mold 10, 12 perpendicular to said first diametrical plane. In this way, the at least four primary and secondary cavities 14, 16 are angularly offset by 90°.

Preferably, each half-mold 10, 12 comprises a plurality of pairs of primary cavities 14 and a plurality of pairs of secondary cavities 16 respectively symmetrical with respect to diametrical planes perpendicular to each other of the relevant half-mold 10, 12. Conveniently, multiple primary and secondary cavities will be provided, juxtaposed along a direction perpendicular to the closing axis x of the mold, as shown in the example. This makes it possible to produce a plurality of manufactured articles in a single molding cycle.

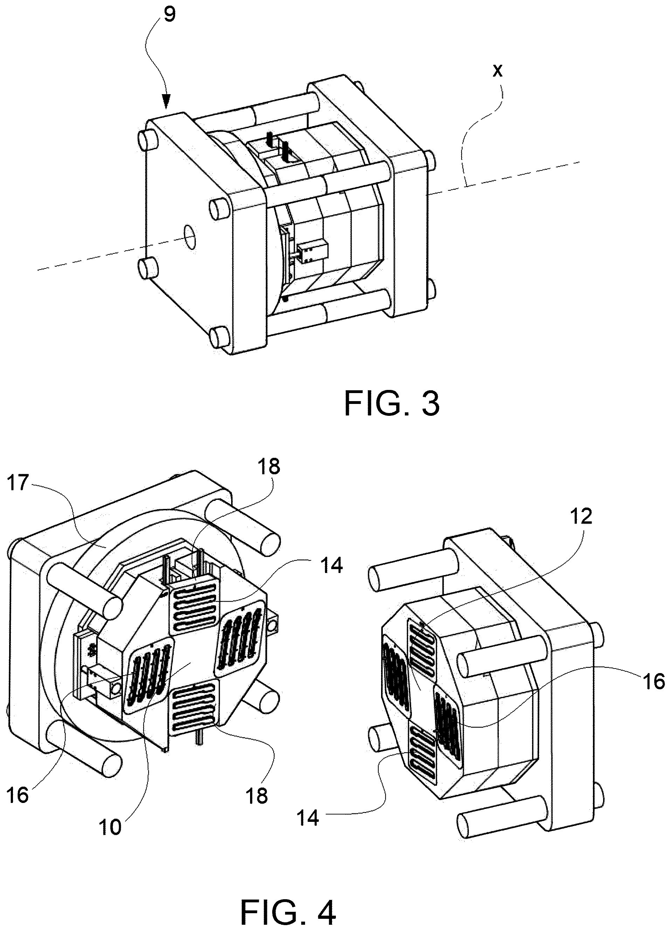

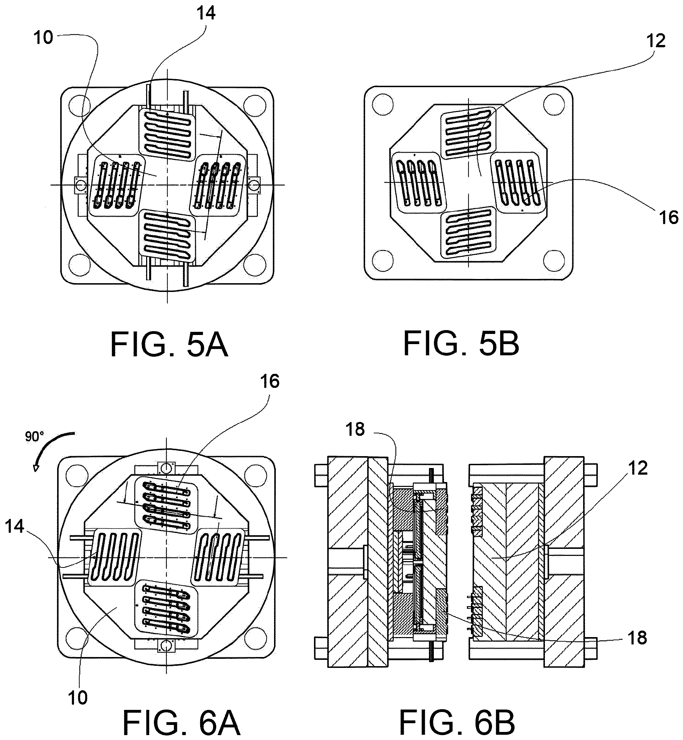

According to a further aspect of the invention, a method is provided for the production of manufactured articles O formed by half-shells in thermoplastic material, comprising the steps of providing an injection mold 9 according to any of the above-described embodiments, as well as providing, in a first molding position, the first half-mold 10 in such a way that the corresponding primary cavity 14 is aligned with a corresponding primary cavity 14 carried by the second half-mold 12, and in such a way that the corresponding secondary cavity 16 is aligned with a corresponding secondary cavity 16 carried by the second half-mold 12 (as shown by way of example in Fig. 4 and 5A-5B).

The injection mold 9 is closed, bringing the two half-molds 10, 12 into contact. Preferably, the first half-mold 10 will be movable along the closing axis x of the mold 9, while the second half-mold 12 will be fixed, according to a configuration known to the person skilled in the art.

The method further comprises the steps of injecting a first charge of thermoplastic material into the primary and secondary cavities 14, 16 of the half-molds 10, 12 until the two half-shells A, B are formed, and opening the injection mold 9, by separating the two half-molds 10, 12 so that the first half-shell A remains in the relevant primary cavity 14 of the second half-mold 12, and the second half-shell B remains in the relevant secondary cavity 6 of the first half-mold 10.

In a second molding position, downstream from the opening of the mold 9, the first half-mold 10 (and/or parts thereof) is conveniently moved with respect to the second half-mold 12 so that the first half-shell A is aligned with the second half-shell B and so that when the injection mold 9 is again in the closed position, the secondary cavity 16 of the second half-mold 12 faces an empty space having an axial extension greater than the maximum axial extension of the primary cavity 14 of the first half-mold 10, measured with respect to a contact plane of the two half-molds 10, 12 in the closed position. Conveniently, the contact plane between the two half-molds 10, 12 is an intermediate plane between the two aligned and facing half-shells A, B, and the maximum axial extension of the primary cavity 14 is the maximum distance (in the x-axis direction) between the deepest recess of that primary cavity 14 and said contact plane).

In the second molding position, downstream from the opening of the mold 9, the first half-mold 10 (and/or parts thereof) is conveniently moved with respect to the second half-mold 12, so that the first half-shell A is aligned with the second half-shell B, and so that when the injection mold 9 is again closed, the secondary cavity 16 of the second half-mold 12 and the corresponding primary cavity 14 of the first half-mold 10 (i.e., the primary cavity 14 of the first half-mold 10 associated with the half-shell complementary to the one associated with that secondary cavity 16 of the second half-mold 12) are offset radially (i.e., along a direction perpendicular to the closing axis x of the mold 9).

According to an embodiment, the first half-mold 10 is rotated around the closing axis x of the injection mold 9 until the first half-shell A is aligned with the second half-shell B (as shown by way of example in Fig. 6A-6B).

Preferably, the at least one primary cavity 14 of the first half-mold 10 is carried by a plate 18 supported by the first half-mold 10, said plate 18 being movable with respect to the first half-mold 10 in such a way that, when the injection mold 9 is closed, the relevant primary cavity 14 avoids dimensional interference with the second half-mold 12.

The plate 18 may then be moved with respect to the first half-mold 10 in such a way that when the injection mold 9 is closed, the relevant primary cavity 14 avoids dimensional interference with the second half-mold 12.

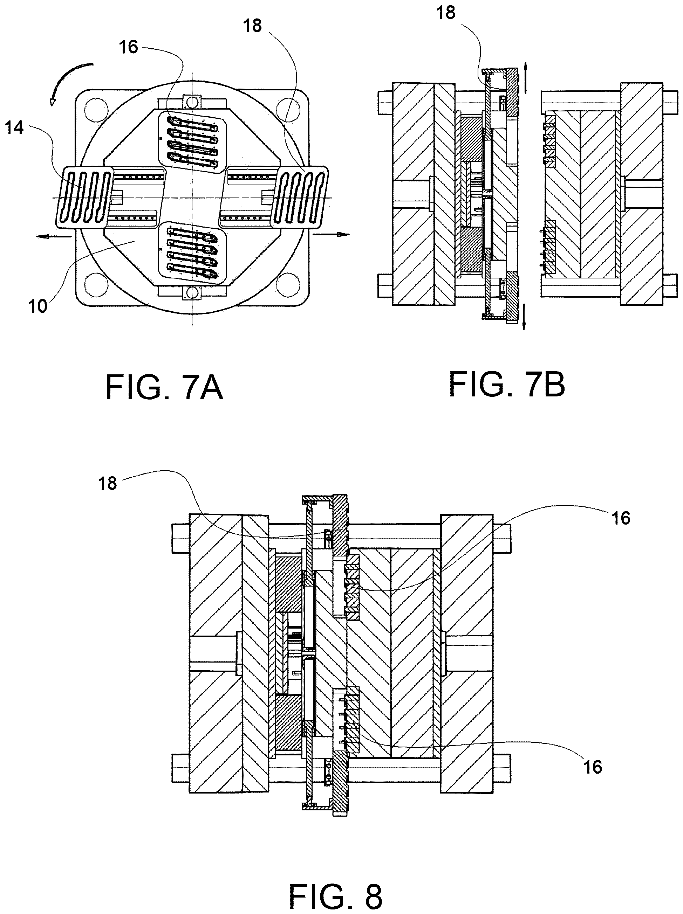

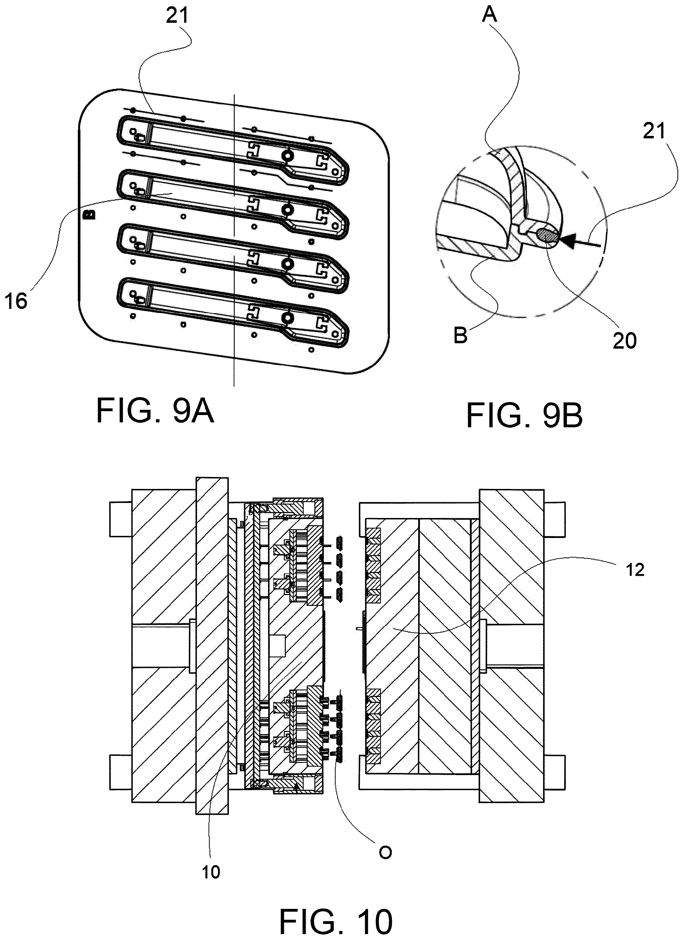

The injection mold 9 is then closed again, juxtaposing the half-shells A, B along a junction edge 20 (as shown by way of example in Fig. 7A-7B and 8), and a second thermoplastics filler injected at or near said junction edge 20, so that half-shells A, B are made mutually integral (as shown by way of example in Fig. 9A-9B).

Finally, the injection mold 9 is opened, and the manufactured article O is extracted (as shown by way of example in Fig. 11).

Preferably, the movement of the plate 18 with respect to the corresponding half-mold 10 is carried out by sliding (preferably translating) said plate 18 along a direction perpendicular to the closing axis x of the injection mold 9.

According to one embodiment, the second charge of thermoplastic material is of a different color and/or composition than the first charge.

Throughout this description and in the claims, terms and expressions indicating positions and orientations, such as "longitudinal", "transverse", etc., refer to the closing axis x of the mold.

With the present invention, it is possible to achieve the high-volume production of injection molds made with two half-shells coupled together, generating a closed volume (or partially open depending on the need of the article), in thermoplastic polymeric material (by way of non-limiting example: polypropylene, polyamide, acrylonitrile-butadiene-styrene, high-density polystyrene, etc., including in blended formulation or supplemented with fiber-reinforced or mineral fillers), having the junction element (which is also watertight) made by molding the same material or chemically cohesive material to the half-shells and functionalized for adhesion (but of different coloring/formulation), with the possibility to make article geometries having undercut areas both inside and outside the half-shells, and to make geometries in general on a half-shell such as (by way of example only) anchorages to interface elements, fasteners, snap-in integrated clips, sleeves with/without an ogive for tubing attachment, etc., all without the need for rotary tables with an axis perpendicular to the molding axis and/or kinematic mechanism for anchoring to the press, but instead using a conventional injection molding machine with a rotary table coaxial to the press axis (attached to or integrated with the movable plane thereof), with the possibility of efficiently and functionally realizing multi-cavity solutions without affecting the molding cycle time and molding sequence, having high hourly productivity, high production efficiency, and tool reliability.

Various aspects and embodiments of making a mold and a method for the production of manufactured articles in thermoplastic material have been described, according to the invention. It is understood that each embodiment may be combined with any other embodiment. Moreover, the invention is not limited to the embodiments described, but may be varied within the scope defined by the appended claims.

## Claims

1. Method for the production of manufactured articles (O) formed by half-shells in thermoplastic material, said method comprising the steps of:
a) providing an injection mold (9) comprising a first half-mold (10) and a second half-mold (12), each of said first and second half-molds (10, 12) comprising at least one primary cavity (14) and at least one secondary cavity (16) angularly offset with respect to a closing axis (x) of the injection mold (9), the primary cavities (14) of the two half-molds (10, 12) being configured to jointly define a cavity adapted to make a first half-shell (A), and the secondary cavities (16) of the two half-molds (10, 12) being configured to jointly define a cavity suitable for making a second half-shell (B);
b) in a first molding position, arranging the first half-mold (10) so that the relative primary cavity (14) is aligned with a corresponding primary cavity (14) carried by the second half-mold (12), and so that the relative secondary cavity (16) is aligned with a corresponding secondary cavity (16) carried by the second half-mold (12);
c) closing the injection mold (9), bringing the two half-molds (10, 12) into contact;
d) injecting a first charge of thermoplastic material into the primary and secondary cavities (14, 16) of the half-molds (10, 12), until the two half-shells (A, B) are formed;
e) opening the injection mold (9), by separating the two half-molds (10, 12) so that the first half-shell (A) remains in the relevant primary cavity (14) of the second half-mold (12) and that the second half-shell (B) remains in the relevant secondary cavity (16) of the first half-mold (10);
f) in a second molding position, moving the first half-mold (10) and/or parts of said first half-mold (10) with respect to the second half-mold (12), so as to align the first half-shell (A) to the second half-shell (B), and in such a way that, when the injection mold (9) is in the closed position, the secondary cavity (16) of the second half-mold (12) faces an empty space having an axial extension greater than the maximum axial extension of the primary cavity (14) of the first half-mold (10), measured with respect to the contact plane of the two half-molds (10, 12) in the closed position;
g) closing the injection mold (9), juxtaposing the half-shells (A, B) along a relevant junction edge (20);
h) injecting a second charge of thermoplastic material at or near said junction edge (20), so as to make the half-shells (A, B) mutually integral;
i) opening the injection mold (9), and extracting the article (O).

2. Method according to claim 1, wherein step (f) is carried out by rotating the first half-mold (10) around the closing axis (x) of the injection mold (9).

3. Method according to claim 1 or 2, wherein the at least one primary cavity (14) of the first half-mold (10) is carried by a plate (18) supported by the first half-mold (10), said plate (18) being movable with respect to said first half-mold (10) in such a way that, when the injection mold (9) is closed, the relevant primary cavity (14) avoids dimensional interference with the second half-mold (12).

4. Method according to claim 3, wherein step (f) is carried out by sliding the plate (18) with respect to the first half-mold (10) along a direction perpendicular to the closing axis (x) of the injection mold (9).

5. Method according to claim 1 or 2, wherein step (f) is carried out by translating the first half-mold (10) along a direction perpendicular to the closing axis of the mold.

6. Method according to any of the preceding claims, wherein each half-mold (10, 12) comprises at least one pair of primary cavities (14) symmetrical with respect to a first diametrical plane of the relevant half-mold (10, 12) and at least one pair of secondary cavities (16) symmetrical with respect to a second diametrical plane of the relevant half-mold (10, 12) perpendicular to said first diametrical plane.

7. Method according to claim 6, wherein each half-mold (10, 12) comprises a plurality of pairs of primary cavities (14) and a plurality of pairs of secondary cavities (16) respectively symmetrical with respect to diametrical planes, perpendicular to each other, of the relevant half-mold (10, 12).

8. Method according to any of the preceding claims, wherein the second charge of thermoplastic material is of a different color and/or composition than the first charge.

9. Injection mold (9) for producing articles (O) formed by half-shells in thermoplastic material, comprising:
- a first half-mold (10) and a second half-mold (12), each of said first and second half-molds (10, 12) comprising at least one primary cavity (14) and at least one secondary cavity (16) angularly offset with respect to a closing axis (x) of the injection mold (9), the primary cavities (14) of the two half-molds (10, 12) being configured to jointly define a form suitable for making a first half-shell (A), and the secondary cavities (16) of the two half-molds (10, 12) being configured to jointly define a form suitable for making a second half-shell (B), said first half-mold (10) supporting a plate (18) carrying the at least one primary cavity (14), said plate (18) being movable with respect to said first half-mold (10);
- primary actuator means, suitable for translating at least one of the two half-molds (10, 12) with respect to the other of the two half-molds (10, 12) along said closing axis (x) of the injection mold (9) between an opening position of the injection mold (9), wherein the two half-molds (10, 12) are mutually spaced along the closing axis (x) of the injection mold (9), and a closing position of the injection mold (9), wherein the two half-molds (10, 12) are mutually in contact;
- primary injector means, adapted to convey a flow of thermoplastic material to the primary and secondary cavities (14, 16) when the injection mold (9) is in a closed configuration;
- secondary actuator means, adapted to rotate at least one of the two half-molds (10, 12) with respect to the other of the two half-molds (10, 12) around said closing axis (x) of the injection mold (9), in such a way that the at least one primary cavity (14) of the first half-mold (10) is aligned with a corresponding primary cavity (14) carried by the second half-mold (12), and in such a way that the at least one secondary cavity (16) of the first half-mold (10) is aligned with a corresponding secondary cavity (16) carried by the second half-mold (12); and
- secondary injector means, suitable for conveying a flow of thermoplastic material at or near a junction edge (20) between the half-shells (A, B), so as to make the latter mutually integral.

10. Mold according to claim 9, wherein the plate (18) is slidingly supported by the first half-shell (10) along a direction perpendicular to the closing axis (x) of the injection mold (9).

11. Injection mold (9) for producing articles (O) formed by half-shells in thermoplastic material, comprising:
- a first half-mold (10) and a second half-mold (12), each of said first and second half-mold (10, 12) comprising at least one primary cavity (14) and at least one secondary cavity (16) angularly offset with respect to a closing axis (x) of the injection mold (9), the primary cavities (14) of the two half-molds (10, 12) being configured to jointly define a form suitable for making a first half-shell (A), and the secondary cavities (16) of the two half-molds (10, 12) being configured to jointly define a form suitable for making a second half-shell (B), said first half-mold (10) supporting a plate (18) which carries the at least one primary cavity (14), said plate (18) being movable with respect to said first half-mold (10);
- primary actuator means, suitable for translating at least one of the two half-molds (10, 12) with respect to the other of the two half-molds (10, 12) along said closing axis (x) of the injection mold (9) between an opening position of the injection mold (9), in which the two half-molds (10, 12) are mutually spaced along the closing axis (x) of the injection mold (9), and a closing position of the injection mold (9), in which the two half-molds (10, 12) are mutually in contact, so that the at least one primary cavity (14) of the first half-mold (10) is aligned with a corresponding primary cavity (14) carried by the second half-mold (12), and in such a way that the at least one secondary cavity (16) of the first half-mold (10) is aligned with a corresponding secondary cavity (16) carried by the second half-mold (12);
- primary injector means, adapted to convey a flow of thermoplastic material to the primary and secondary cavities (14, 16) when the injection mold (9) is in a closed configuration;
- secondary actuator means, suitable for translating at least one of the two half-molds (10, 12) with respect to the other of the two half-molds (10, 12) along a direction perpendicular to said closing axis (x) of the injection mold (9), in such a way that, when the injection mold (9) is in the closed position, the secondary cavity (16) of said second half-mold (12) faces an empty space having an axial extension at least equal to the axial thickness of the first half-mold (10); and
- secondary injector means, suitable for conveying a flow of thermoplastic material at or near a junction edge (20) between the half-shells (A, B), so as to make the latter mutually integral.

12. Mold according to one of claims 9 to 11, wherein each half-mold (10, 12) comprises at least one pair of primary cavities (14) symmetrical with respect to a first diametrical plane of the relevant half-mold (10, 12) and at least one pair of secondary cavities (16) symmetrical with respect to a second diametrical plane of the relevant half-mold (10, 12) perpendicular to said first diametrical plane.

13. Mold according to one of claims 9 to 12, wherein each half-mold (10, 12) comprises a plurality of pairs of primary cavities (14) and a plurality of pairs of secondary cavities (16) respectively symmetrical with respect to diametrical planes, perpendicular to each other, of the relevant half-mold (10, 12).
